Europäisches Patentamt

European Patent Office

Office européen des brevets

(19)

(11) Numéro de publication: **0 231 704
B1**

# (12) FASCICULE DE BREVET EUROPEEN

(45) Date de publication du fascicule du brevet:
**29.08.90**

(21) Numéro de dépôt: **86402897.2**

(22) Date de dépôt: **22.12.86**

(51) Int. Cl.⁵: **A01M 27/00**

(54) **Dispositif de lutte contre les animaux nuisibles, notamment les taupes.**

(30) Priorité: **06.01.86 FR 8600079**

(43) Date de publication de la demande:
**12.08.87 Bulletin 87/33**

(45) Mention de la délivrance du brevet:
**29.08.90 Bulletin 90/35**

(84) Etats contractants désignés:
**AT BE CH DE ES GB IT LI LU NL SE**

(56) Documents cités:
**CH-A- 88 333
DE-C- 14 615
US-A- 1 517 085**

(73) Titulaire: **Bernadet Estebeteykoborda, Charles Etienne Marie Guy, Quartier du Bois, Briscous (Pyrénées Orientales)(FR)**

(72) Inventeur: **Bernadet Estebeteykoborda, Charles Etienne Marie Guy, Quartier du Bois, Briscous (Pyrénées Orientales)(FR)**

(74) Mandataire: **Herrburger, Pierre, Cabinet Pierre Herrburger 115, boulevard Haussmann, F-75008 Paris(FR)**

## Description

La présente invention a pour objet un dispositif de lutte contre les animaux nuisibles, notamment les taupes, destiné à être mis en place au-dessus de l'orifice dégagé et mis à l'air libre d'une galerie.

Les agriculteurs connaissent, malheureusement, bien les dégâts que les taupes peuvent faire en creusant leurs galeries souterraines.

Pour y remédier, de nombreux dispositifs du type piège ont déjà été proposés, mais, malheureusement, aucun de ces dispositifs ne permet d'effectuer une destruction radicale des taupes.

Pour éliminer plus efficacement les animaux nuisibles, on a pensé à proposer des dispositifs munis de mécanismes de mise à feu. Le Brevet CH-A 88 333 décrit par exemple un tel dispositif de ce type comportant un canon d'axe horizontal monté sur un support reposant directement sur le sol, ainsi qu'une tige qui lorsqu'elle entre en contact avec un animal par son extrémité, déclenche automatiquement le mécanisme de mise à feu.

Un dispositif plus efficace est décrit dans le brevet DE-C 14 615; ce dispositif plus particulièrement destiné à la lutte contre les taupes se compose d'un corps longitudinal muni de fourches permettant sa fixation selon une position approximativement verticale dans le sol et dans sa partie interne d'un canon destiné à recevoir une cartouche ainsi que d'organes de mise à feu dont le déplacement par une taupe entraîne automatiquement les mécanismes de la mise à feu de la cartouche.

Il a été découvert que l'utilisation d'un dispositif de ce type pouvait permettre une destruction radicale des taupes en utilisant une habitude particulière de ces animaux.

Ceux-ci ont en effet l'habitude, au fur et à mesure qu'ils creusent leurs galeries et terriers dans la terre, d'évacuer la terre en excès vers l'extérieur, par des galeries secondaires qui sont bouchées par des monticules de soufflage ou taupinières qui signalent leur présence à l'extérieur.

Or, on a remarqué que si l'on détruit ces monticules et laisse à l'air libre l'orifice d'une galerie secondaire, la taupe vient, dans les heures qui suivent, reboucher ce trou car elle ne peut supporter le courant d'air dans ses galeries.

Pour ce faire, elle prélève de la terre dans le sous-sol et reconstitue le monticule de soufflage.

A cet effet, l'invention concerne un dispositif du type ci-dessus, destiné à être mis en place au-dessus de l'orifice dégagé et mis à l'air libre d'une galerie. Ce dispositif se compose, d'une part, d'un corps longitudinal muni, sur sa périphérie, de fourches permettant sa fixation selon une position approximativement verticale dans le sol, autour de l'orifice de la galerie et dans sa partie interne, d'un canon destiné à recevoir une cartouche de chasse classique, ce canon débouchant au droit de l'orifice de la galerie à sa partie avant et étant fermé à sa partie arrière par une culasse connue elle-même, mobile entre une position d'armement et une position d'actionnement et dont le déplacement vers sa position d'actionnement entraîne la mise à feu de la cartouche et l'envoi d'une charge de plombs à l'intérieur de la galerie, ce déplacement étant commandé par celui d'une gâchette, elle-même mobile entre une position d'armement, dans laquelle elle est maintenue par des organes d'armement contre la force d'un ressort à compression, et une position d'actionnement pour commander le déplacement de la culasse vers sa position d'actionnement, et, d'autre part, d'organes de mise à feu dont le déplacement par une taupe se trouvant dans la galerie entraîne automatiquement la libération de la gâchette et de la culasse vers leur position d'actionnement respective et la mise à feu de la cartouche.

En conséquence, lorsque la taupe revient pour reboucher son trou, ce dispositif provoque automatiquement le tir d'une cartouche de chasse classique, de petit calibre, mais suffisamment puissante pour la tuer net. On peut utiliser notamment des cartouches de type commercial, calibre 9M/m, plombs nº 8; bien entendu, ce type de cartouche ne doit pas être considéré comme limitatif de l'invention.

Malgré ses avantages certains en ce qui concerne l'efficacité, le dispositif décrit ci-dessus ne peut pas être utilisé en toute sécurité et présente un danger, en particulier pour les enfants. La présente invention a pour objet de remédier à cet inconvénient en empêchant toute mise à feu intempestive lorsque le corps longitudinal n'est pas mis en place dans le sol au-dessus de l'orifice d'une galerie de taupe.

A cet effet, l'invention concerne un dispositif du type ci-dessus, caractérisé en ce que le canon qui reçoit la cartouche à sa partie arrière est percé dans un tube de sécurité susceptible de coulisser axialement dans un alésage de sécurité du corps longitudinal entre une position de chasse dans laquelle la cartouche est susceptible de venir en prise avec la culasse et le percuteur, et une position de sécurité dans laquelle la cartouche demeure hors d'atteinte du percuteur, le tube de sécurité et le canon étant automatiquement rappelé en position de sécurité sous l'action d'organes de sécurité lorsque le dispositif ne repose pas sur le sol en position approximativement verticale.

Selon une autre caractéristique de l'invention, le tube de sécurité est muni, à son extrémité opposée à la culasse, d'une pièce en forme de Y comportant des perçages pour les fourches de fixation et reliée au corps longitudinal au moyen de ressorts de rappel constituant les organes de sécurité et dont la résistance est comprise entre le poids du corps longitudinal et celui de la pièce en forme de Y, de manière à amener le dispositif en position de chasse sous l'effet de son poids lorsqu'il repose sur le sol en position approximativement verticale et à l'amener en position de repos dès qu'il n'est plus soumis à ce poids.

Par suite de cette configuration, si on soulève le dispositif ou si on le fait tomber de sa position de chasse, les ressorts de rappel amènent automatiquement le dispositif en position de sécurité dans laquelle le tir est impossible; de même, si l'on pointe le dispositif vers le ciel, la résistance des ressorts de sécurité étant supérieure au poids de la pièce en forme de Y, le tir est également impossible.

Selon une autre caractéristique de l'invention, la gâchette est mise en place dans un perçage du corps du dispositif approximativement perpendiculaire au canon, et débouchant dans ce dernier, et est constituée par une tige munie, à l'une de ses extrémités, d'un bouton faisant saillie vers l'extérieur et permettant la remise de la gâchette en position d'armement, et, à son extrémité opposée, d'un ergot coopérant avec la culasse pour la maintenir en position d'armement lorsque la gâchette se trouve elle-même en position d'armement.

Conformément à l'invention, l'ergot placé à l'extrémité de la gâchette pénètre en fait dans le canon pour bloquer un bourrelet prévu à cet effet sur une tête de gâchette mise en place de façon classique solidairement à la culasse et à l'arrière de cette dernière.

Selon une autre caractéristique de l'invention, la gâchette comporte, sur sa périphérie, une encoche coopérant avec les organes d'armement pour la maintenir en position d'armement.

Le maintien du dispositif en position d'armement nécessite donc l'armement successif, d'une part, de la gâchette et, d'autre part, de la culasse.

Selon une autre caractéristique de l'invention, les organes de mise à feu sont constitués par deux bras fixés à l'avant du corps en prolongement de celui-ci et portant un axe de basculement sur lequel est articulé un élément de veille dont le basculement vers le corps du dispositif par une taupe se trouvant dans la galerie entraîne le déplacement, en sens inverse, d'une tige de détente, elle-même articulée sur l'élément de veille, s'étendant dans un perçage du corps du dispositif essentiellement parallèle au canon, débouchant dans le perçage renfermant la gâchette, et portant, à son extrémité opposée à l'élément de veille, un ergot coopérant avec l'encoche de la gâchette et constituant les organes d'armement, le déplacement vers l'extérieur de la tige de détente entraînant la libération de la gâchette puis de la culasse vers leur position d'actionnement respective et la mise à feu de la cartouche et l'envoi d'une charge de plombs à l'intérieur de la galerie.

Selon une autre caractéristique de l'invention, l'élément de veille est constitué par un bras basculant portant, en sa partie centrale, un premier perçage permettant la mise en place de l'axe de basculement à l'une de ses extrémités ou première extrémité, un second perçage permettant la mise en place d'un axe de translation permettant le déplacement de la tige de détente et à sa seconde extrémité opposée à la première, un disque de veille destiné à être mis en place au-dessus de l'orifice de la galerie, dans une position approximativement horizontale pour pouvoir être basculé par une taupe.

Il est clair que, lors du tir, le plomb provenant de la cartouche doit traverser le disque de veille; il est donc indispensable que celui-ci n'altère pas la puissance de tir du canon pour pouvoir être certain de détruire la taupe.

A cet effet, le disque de veille peut être constitué par une fourchette approximativement circulaire en forme d'arc de cercle, solidaire du bras basculant et munie, dans sa partie interne, d'une rainure permettant la mise en place d'un palet circulaire amovible et interchangeable en un matériau friable ou de faible résistance.

Ce palet peut être en terre cuite, argile séchée, carton fort imperméabilisé, bois ou matière plastique... Il a, de préférence, une épaisseur de l'ordre de 1 mm. Un tel palet est, bien entendu, détruit à chaque tir et doit donc être, à chaque fois, remplacé.

Selon une caractéristique préférentielle de l'invention, le disque de veille est cependant constitué par une pièce en forme de poêle percée en sa partie centrale pour permettre le passage des plombs.

A part le disque de veille, la totalité des éléments formant le dispositif conforme à l'invention, est généralement réalisée en un métal tel que l'acier ayant subi un traitement spécial anti-corrosion, étant donné sa destination à un emploi extérieur.

La description ci-dessus montre que l'utilisation du dispositif conforme à l'invention est extrêmement simple: en effet, lorsqu'un utilisateur a repéré un monticule de soufflage frais, indiquant qu'une taupe est en activité dans les parages, il lui suffit de découvrir le monticule de façon à dégager complètement l'orifice de la galerie dont l'axe est généralement approximativement perpendiculaire à la surface du sol. A ce moment, il n'a plus qu'à placer le dispositif, non armé, au-dessus du trou en enfonçant dans le sol les fourches de fixation, qui sont généralement en forme de baïonnette et dépassent d'environ 25 cm le corps du dispositif, de part et d'autre de l'orifice, de façon telle que l'élément de veille soit le plus près possible du sol, mais, sans obstruer la galerie pour que la taupe puisse se rendre compte du courant d'air. Ensuite, après avoir vérifié la stabilité du dispositif, il ne reste plus à l'utilisateur qu'à le charger par une cartouche puis à l'armer, en armant successivement la gâchette et la culasse.

L'efficacité de ce dispositif est telle que l'on a pu constater que lors du tir de la cartouche, même si la taupe ne se trouve pas dans le champ de tir du canon, elle est tuée par la force de déflagration. On a, en effet, pu recueillir, après un tir, plusieus taupes mortes mais absolument intactes de plombs, qui se trouvaient, au moment du tir, à plus de 15 cm du centre de ce dernier.

Bien qu'il ait été conçu avant tout pour la lutte contre les taupes, le dispositif conforme à l'invention peut, en subissant des modifications minimes, être utilisé pour la destruction d'autres animaux nuisibles; par exemple, on pourrait concevoir, en inversant le corps longitudinal et en modifiant l'élément de veille pour le transformer en perchoir, d'adapter ce dispositif à la lutte contre les oiseaux qui peuvent être extrêmement gênants, notamment autour des aéroports.

Les caractéristiques du dispositif qui fait l'objet de l'invention seront décrites plus en détail en se référant aux dessins annexés, dans lesquels:

— la figure 1 est un schéma montrant la mise en place dans le sol, au-dessus d'une galerie de taupe, d'un dispositif conforme à l'invention,

— la figure 2 est une vue en perspective d'un tel dispositif non muni d'organes de sécurité,

— la figure 3 est une vue en coupe du dispositif représenté sur la figure 2, dans laquelle les fourches de fixation n'ont pas été représentées pour des raisons de clarté,

– la figure 4 est une vue détaillée de l'élément de veille,

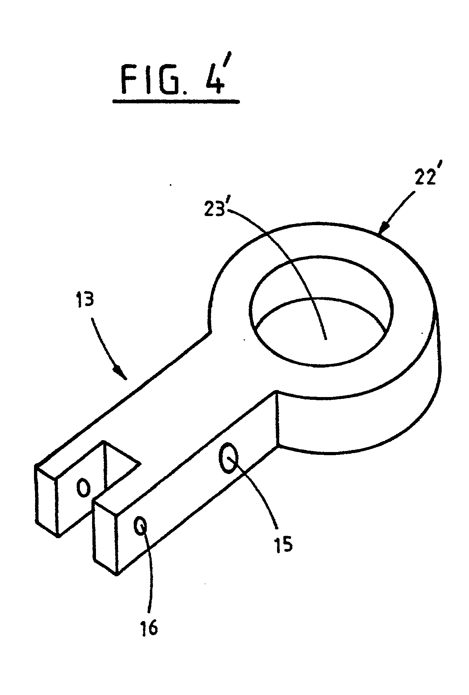

– la figure 4' représente une variante d'élément de veille,

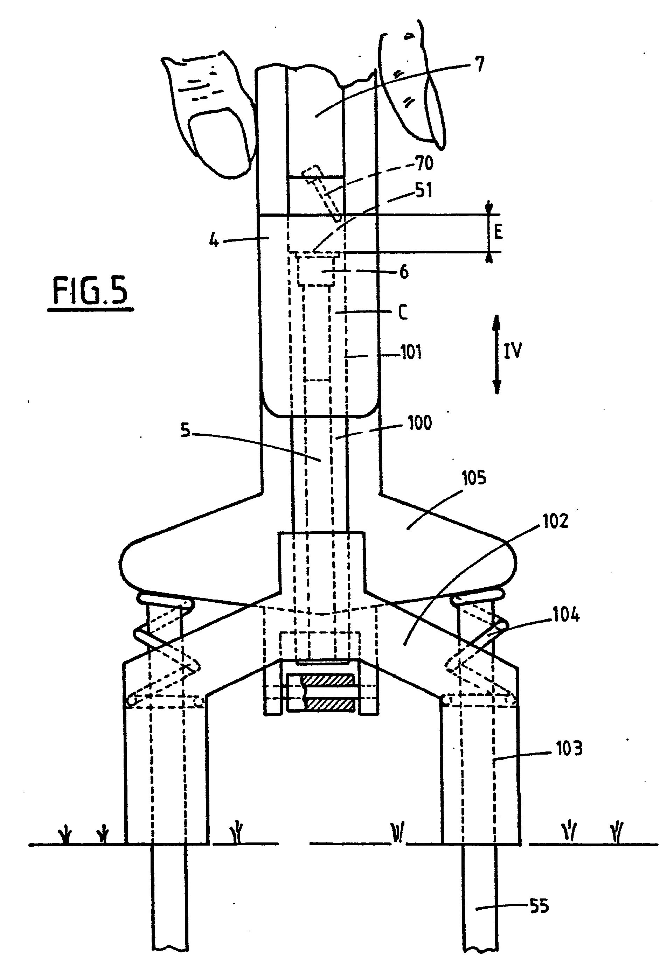

– la figure 5 représente la partie inférieure d'un dispositif conforme à l'invention muni d'organes de sécurité, en position de sécurité,

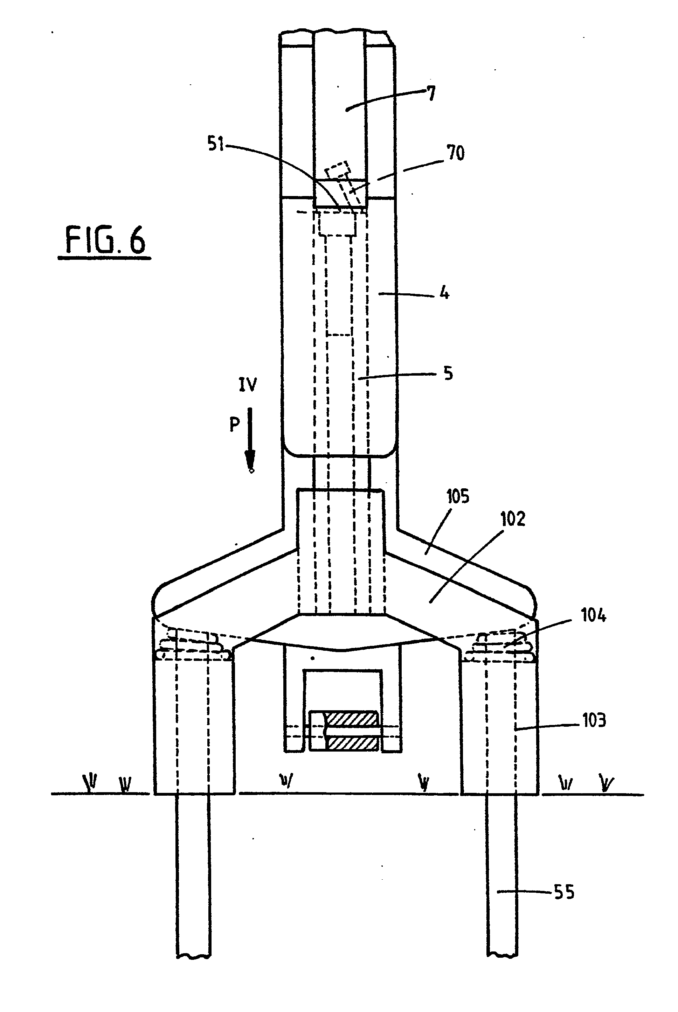

– la figure 6 représente le dispositif de la figure 5 en position de chasse.

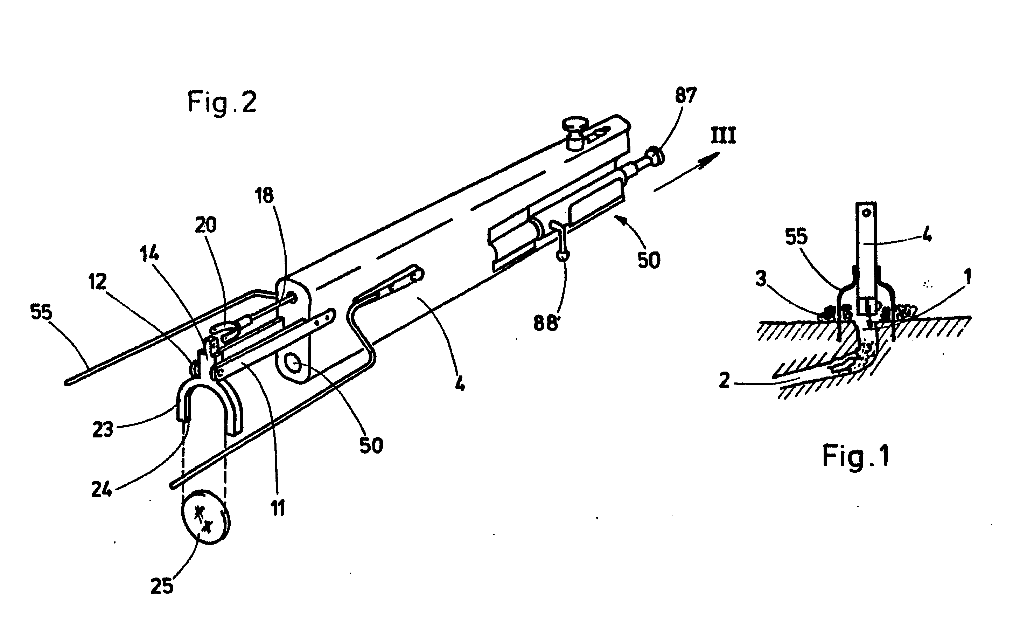

Selon la figure 1, le dispositif est destiné à être mis en place au-dessus de l'orifice 1 d'une galerie de taupe 2, après dégagement du monticule de soufflage 3, et mise à l'air libre de cet orifice 1.

Le dispositif est schématiquement constitué d'un corps longitudinal 4 destiné à être mis en place approximativement verticalement au-dessus de l'orifice 1 et comportant, sur sa périphérie, des fourches 55 permettant sa fixation dans le sol.

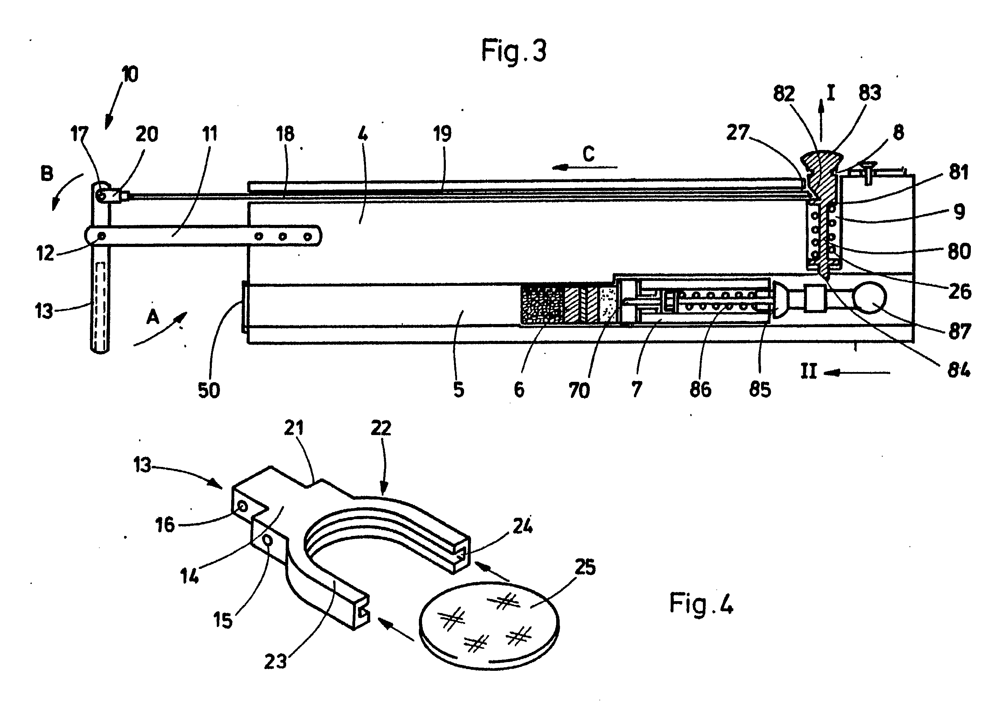

Selon les figures 2 et 3, le corps 4 est percé, à sa partie interne, d'un canon longitudinal 5 destiné à recevoir une cartouche de chasse classique 6. Le canon 5 débouche, à sa partie avant, par un orifice 50 se trouvant au droit de l'orifice 1 lorsque le dispositif est mis en place dans le sol par les fourches 55.

De façon connue en elle-même, le canon 6 est, par ailleurs, fermé à sa partie arrière par une culasse mobile 7 coopérant avec une gâchette 8 mise en place dans un perçage 9 du corps 1, approximativement perpendiculaire au canon 5 et débouchant dans celui-ci. La gâchette 8 et la culasse 7 sont mobiles entre une position d'armement et une position d'actionnement pour déclencher la mise à feu de la cartouche et l'envoi d'une charge de plombs à l'intérieur de la galerie 2 de la taupe. La mise en œuvre de ce mouvement sera décrite plus en détail dans la suite de cet exposé.

Selon les figures 2 et 3, ce mouvement est commandé par des organes de mise à feu 10 qui sont automatiquement déplacés par une taupe se trouvant dans la galerie 2 lorsque celle-ci tente de reboucher l'orifice 1.

Ces organes 10 sont constitués par deux bras 11 fixés à l'avant du corps 4 en prolongement de celui-ci, qui portent, à leur extrémité un axe de basculement 12 sur lequel est articulé un élément de veille 13.

Selon les figures 2, 3 et 4, cet élément de veille 13 est constitué par un bras basculant 14 portant, en sa partie centrale, un premier perçage 15 permettant la mise en place de l'axe de basculement 12 et à une première de ses extrémités, un second perçage 16 permettant la mise en place d'un axe de translation 17 sur lequel est articulée une tige de détente 18 s'étendant dans un perçage 19 du corps 4 approximativement parallèle au canon 5 et débouchant dans le perçage 9 dans lequel est mise en place la gâchette 8.

La tige de détente 18 comporte, à son extrémité extérieure, un étrier 20 permettant son articulation sur l'axe 17.

Conformément aux figures, le bras basculant 14 est muni d'un épaulement 21. Cette caractéristique, qui peut être utile pour des raisons de construction, ne doit, en aucun cas, être considérée comme limitative de l'invention.

Par ailleurs, le bras basculant 14 comporte, à son extrémité opposée au second perçage 16, un disque de veille 22 constitué par une fourchette 23 en forme d'arc de cercle munie, à sa partie interne, d'une rainure circulaire 24, permettant la mise en place d'un palet circulaire amovible 25 en un matériau de faible résistance.

Conformément à cette description, il est clair que, lorsque la taupe se trouvant dans la galerie 2 cherche à reboucher l'orifice 1, celle-ci vient automatiquement percuter le palier 25, ce qui entraîne la rotation du disque de veille 22 autour de l'axe de basculement 12, selon la flèche B de la partie supérieure du bras basculant 14, et la translation vers l'extérieur de la tige de détente 18 conformément à la flèche C, étant donné l'articulation de cette dernière autour de l'axe 7 (figure 3).

Comme on le verra ci-dessous, ce mouvement entraîne, simultanément et automatiquement, la mise à feu de la cartouche 6 et l'envoi d'une charge de plombs à l'intérieur de la galerie selon la flèche D (figure 1).

Cette charge de plombs détruit automatiquement le palet 25 qui doit donc être remplacé à chaque tir, mais, étant donné que celui-ci est constitué d'un matériau extrêmement fragile, la puissance de tir n'est pas altérée et est toujours suffisante pour pouvoir, à coup sûr, détruire la taupe.

Selon une variante de l'invention représentée sur la figure 4', le disque de veille 22' est simplement constitué par une pièce en forme de poêle percée à sa partie centrale 23' pour permettre le passage des plombs. On a pu constater qu'une telle configuration permettait d'obtenir des résultats pratiquement aussi satisfaisants que ceux obtenus avec la configuration représentée sur la figure 4, sans obligation d'intervention après chaque tir.

Selon la figure 3, la gâchette 8 est constituée par une tige 80 comportant, à sa partie avant, un épaulement 81 sur lequel s'appuie un ressort de compression 26 fixé solidairement au corps 5. Ce ressort exerce sur la tige 80 une force tendant à la déplacer vers l'extérieur selon la flèche I. Pour bloquer la gâchette contre cette force, en position dite d'armement, celle-ci comporte, sur sa périphérie, une encoche à profil en biais 82 coopérant avec l'extrémité biseautée 27 de la tige de détente 18 qui constitue un ergot permettant de maintenir la gâchette dans la position représentée sur la figure 3; il est clair que, lorsque, par suite du déplacement du disque de veille 22 ou 22' par une taupe se trouvant dans la galerie 2, la tige 18 se déplace vers l'extérieur selon la flèche C, l'encoche 82 se trouve libérée de l'ergot 27 et la gâchette 8 peut librement se déplacer selon la flèche I sous l'action du ressort 26.

A partir de cette position de dégagement, il est extrêmement simple de ramener la gâchette 8 en position d'armement (représentée sur la figure 3) en exerçant sur le bouton 83, faisant saillie vers l'extérieur, à l'extrémité de la tige 80, une force dans une direction opposée à celle de la flèche I.

Au cours de ce déplacement, étant donné les formes biseautées, d'une part, de l'encoche 82 et, d'autre part, de l'ergot 27, ces deux éléments viennent obligatoirement s'encliqueter l'un dans l'autre pour bloquer la gâchette et empêcher le ressort 26 d'exercer son action.

Le déplacement selon la flèche I de la gâchette 8 entraîne, automatiquement, la mise à feu de la cartouche 6 et l'envoi d'une charge de plombs dans la galerie 2.

En effet, la tige 8 est munie, à son extrémité opposée au bouton 83, d'une extrémité biseautée 84 constituant un ergot coopérant avec un bourrelet 85 à profil en biais prévu à l'arrière de la culasse 7 et retenant cette dernière dans une position en retrait par rapport à celle représentée sur la figure 3, contre la force d'un ressort de compression 86.

Lorsque l'ergot 84 se trouve déplacé vers le haut, selon la flèche I, la culasse 7 se trouve entraînée par le ressort 86 dans la direction représentée par la flèche II et, le percuteur 70 prévu à sa partie avant, vient en prise avec la cartouche 6 pour commander la mise à feu de cette dernière.

Comme on peut le voir plus facilement sur la figure 2, le canon 5 est ouvert vers l'extérieur à sa partie arrière 50, de manière à permettre la manipulation, d'une part, d'un bouton 87 prévu à l'arrière de la culasse 7 afin de permettre le réarmement de cette dernière par déplacement de celui-ci selon une direction III opposée à la direction II, mouvement par suite duquel, grâce à la forme biseautée de ces éléments, l'ergot 84 vient se coincer à l'avant du bourrelet 85 et, d'autre part, d'un bouton 88 permettant le démontage de la culasse pour la mise en place de la cartouche 6.

Selon une variante particulièrement avantageuse de l'invention, représentée sur les figures 5 et 6, le canon 5 qui reçoit la cartouche 6 à sa partie arrière 51 n'est pas directement percé dans le corps longitudinal 4 du dispositif, mais, est percé dans un tube de sécurité 100 susceptible de coulisser axialement dans un alésage de sécurité 101 du corps longitudinal 4, tel que représenté par la flèche IV entre une position de sécurité représentée sur la figure 5 et une position de chasse représentée sur la figure 6.

Selon la figure 5, en position de sécurité, l'extrémité arrière 51 du canon 1 est joujours située au moins à une distance E de la culasse 7 et demeure donc hors d'atteinte du percuteur 70. Le tir est, par suite, impossible.

Selon la figure 6, en position de chasse, l'extrémité arrière 51 du canon 5 est susceptible de venir en prise avec le percuteur 70 de la culasse 7, et, le tir est donc possible.

Selon les figures 5 et 6, le déplacement du dispositif entre la position de sécurité et la position de chasse est commandé par des organes de sécurité qui vont être décrits ci-dessous.

Selon les figures 5 et 6, le tube de sécurité 100 est muni, à son extrémité opposée à la culasse 7, d'une pièce en forme de Y 102 comportant des perçages 103 destinés à permettre le passage des fourches de fixation 55; ces fourches sont, elles-mêmes, fixées à l'extrémité d'une pièce en forme d'arceau 105 montée à la partie inférieure du corps longitudinal 4. Les pièces 102 et 105 sont reliées au moyen de ressorts de rappel 104 dont la résistance est comprise entre le poids du corps 4 et celui de la pièce 102.

Par suite de cette configuration, lorsque le corps longitudinal 5 est fixé verticalement dans le sol au moyen des fourches 55 (figure 6) son poids P s'applique sur les ressorts 104; étant donné que la résistance de ces ressorts est inférieure au poids P, le dispositif se trouve en position de chasse, c'est-à-dire que le percuteur 70 peut venir en prise avec la cartouche 6: le tir est donc possible.

Au contraire, si l'on soulève le dispositif, le poids P ne s'applique plus sur les ressorts 104 et donc, la résistance de ceux-ci éloigne les deux pièces 102 et 105, et simultanément éloigne l'arrière 51 du canon 5 de la culasse 7, rendant par suite tout tir impossible.

## Revendications

1. Dispositif de lutte contre les animaux nuisible notamment les taupes, destiné à être mis en place au-dessus de l'orifice (1) dégagé et mis à l'air libre d'une galerie (2), dispositif se composant, d'une part, d'un corps longitudinal (4) muni sur sa périphérie de fourches (55) permettant sa fixation selon une position approximativement verticale dans le sol autour de l'orifice (1) de la galerie (2) et dans sa partie interne, d'un canon (5) destiné à recevoir une cartouche de chasse classique (6), ce canon (5) débouchant au droit de l'orifice (1) de la galerie (2), à sa partie avant (50) et étant fermé à sa partie arrière par une culasse (7), connue en elle-même, mobile entre une position d'armement et une position d'actionnement et dont le déplacement vers sa position d'actionnement entraîne la mise à feu de la cartouche (6) et l'envoi d'une charge de plombs à l'intérieur de la galerie (2), ce déplacement étant commandé par celui d'une gâchette (8), elle-même mobile entre une position d'armement, dans laquelle elle est maintenue par des organes d'armement (27) contre la force d'un ressort à compression (26), et une position d'actionnement pour commander le déplacement de la culasse (7) vers sa position d'actionnement et, d'autre part, d'organes de mise à feu (10) dont le déplacement par une taupe se trouvant dans la galerie (2) entraîne automatiquement la libération de la gâchette (8) et de la culasse (7) vers leur position d'actionnement respective et la mise à feu de la cartouche (6), dispositif caractérisé en ce que le canon (5) qui reçoit la cartouche (6) à sa partie arrière (51) est percé dans un tube de sécurité (100) susceptible de coulisser axialement dans un alésage de sécurité du corps longitudinal entre une position de chasse dans laquelle la cartouche (6) est susceptible de venir en prise avec la culasse (7) et un percuteur (70), et une position de sécurité (100) dans laquelle la cartouche demeure hors d'atteinte du percuteur, le tube de sécurité et le canon (5) étant automatiquement rappelés en position de sécurité sous l'action d'organes de sécurité (102-105) lorsque le dispositif ne repose pas sur le sol en position approximativement verticale.

2. Dispositif selon la revendication 1, caractérisé en ce que le tube de sécurité (100) est muni, à son extrémité opposée à la culasse (7), d'une pièce en forme de Y (102) comportant des perçages (103) pour les fourches de fixation (55) et reliée au corps longitudinal (4) au moyen de ressorts de rappel (104) constituant les organes de sécurité et dont la résistance est comprise entre le poids du corps (4) et celui de la pièce (102) de manière à amener le disp-position en position de chasse sous l'effet de son poids lorsqu'il repose sur le sol en position approximativement verticale et à l'amener en position de repos dès qu'il n'est plus soumis à ce poids.

3. Dispositif selon l'une quelconque des revendications 1 et 2, caractérisé en ce que la gâchette (8) est mise en place dans un perçage (9) du corps (4) du dispositif approximativement perpendiculaire au canon (5) et débouchant dans ce dernier et est constituée par une tige (80) munie, à l'une de ses extrémités, d'un bouton (83) faisant saillie vers l'extérieur et permettant la remise de la gâchette (8) en position d'armement et à son extrémité opposée, d'un ergot (84) coopérant avec la culasse (7) pour la maintenir en position d'armement lorsque la gâchette (8) se trouve elle-même en position d'armement.

4. Dispositif selon la revendication 3, caractérisé en ce que la gâchette (8) comporte, sur sa périphérie, une encoche (82) coopérant avec les organes d'armement (27) pour la maintenir en position d'armement.

5. Dispositif selon l'une quelconque des revendications 1 à 4, caractérisé en ce que les organes de mise à feu (10) sont constitués par deux bras (11) fixés à l'avant du corps (4) en prolongement de celui-ci et portant un axe de basculement (12) sur lequel est articulé un élément de veille (13) dont le basculement vers le corps (4) du dispositif par une taupe se trouvant dans la galerie (2), entraîne le déplacement en sens inverse d'une tige de détente (18) elle-même articulée sur l'élément de veille (13), s'étendant dans un perçage (19) du corps (4) du dispositif essentiellement parallèle au canon (5) débouchant dans le perçage (9) renfermant la gâchette (8) et portant, à son extrémité opposée à l'élément de veille (13), un ergot (27) coopérant avec l'encoche (82) de la gâchette (8) et constituant les organes d'armement, le déplacement vers l'extérieur de la tige de détente (18) entraînant la libération de la gâchette (8) puis de la culasse (7) vers leur position d'actionnement respective et la mise à feu de la cartouche (6) et l'envoi d'une charge de plombs à l'intérieur de la galerie (2).

6. Dispositif selon la revendication 5, caractérisé en ce que l'élément de veille (13) est constitué par un bras basculant (14) portant, en sa partie centrale, un premier perçage (15) permettant la mise en place de l'axe de basculement (12), à l'une de ses extrémités ou première extrémité, un second perçage (16) permettant la mise en place d'un axe de translation (17) permettant le déplacement de la tige de détente (18), et à sa seconde extrémité opposée à la première, un disque de veille (22) destiné à être mis en place au-dessus de l'orifice (1) de la galerie (2) dans une position approximativement horizontale pour pouvoir être basculé par une taupe.

7. Dispositif selon la revendication 5, caractérisé en ce que le disque de veille (22) est constitué par une pièce en forme de poêle percée en sa partie centrale pour permettre le passage des plombs.

## Claims

1. Device for controlling animal pests, in particular moles, which is intended to be placed above the orifice (1), cleared and exposed to the open air, of a gallery (2), the said device being composed, on the one hand, of a longitudinal body (4) provided on its periphery with forks (55) enabling its fastening, in an approximately vertical position, in the ground around the orifice (1) of the gallery (2) and provided in its interior with a gun (5) intended to receive a conventional sporting cartridge (6), this gun (5) emerging at right angles to the orifice (1) of the gallery (2), at its front (50), and being closed at its rear by a breech (7), known per se, which is movable between a cocked position and an actuating position and the displacement of which towards its actuating position causes the firing of the cartridge (6) and the sending of a lead charge inside the gallery (2), this displacement being controlled by that of a trigger (8), itself movable between a cocked position, in which it is maintained by cocking members (27) against the force of a compression spring (26), and an actuating position for controlling the displacement of the breech (7) towards its actuating position and, on the other hand, of firing members (10), the displacement of which by a mole situated in the gallery (2) automatically causes the release of the trigger (8) and of the breech (7) towards their respective actuating position and the firing of the cartridge (6), which device is characterized in that the gun (5) which receives the cartridge (6) at its rear (51) is inserted in a safety tube (100) capable of sliding axially in a safety bore of the longitudinal body between a shooting position in which the cartridge (6) is able to engage with the breech (7) and a firing pin (70), and a safety position (100) in which the cartridge remains out of reach of the firing pin, the safety tube and the gun (5) being automatically returned to the safety position under the action of safety members (102–105) when the device is not resting on the ground in an approximately vertical position.

2. Device according to Claim 1, characterized in that the safety tube (100) is provided, at its end opposite the breech (7), with a Y-shaped part (102) which possesses through holes (103) for the fastening forks (55) and is connected to the longitudinal body (4) by means of return springs (104) constituting the safety members and the resistance of which lies between the weight of the body (4) and that of the part (102) so as to bring the arrangement into the shooting position under the effect of its weight when it is resting on the ground in an approximately vertical position and to bring it into the position of rest as soon as it is no longer subjected to this weight.

3. Device according to either one of Claims 1 and 2, characterized in that the trigger (8) is placed in a through hole (9) of the body (4) of the device approximately perpendicular to the gun (5) and emerging in the latter and consists of a rod (80) provided, at one of its ends, with a button (83) projecting outwards and enabling the resetting of the trigger (8) in the cocked position and, at its opposite end, with a lug (84) co-operating with the breech (7) in order to maintain it in the cocked position when the trigger (8) is itself in the cocked position.

4. Device according to Claim 3, characterized in that the trigger (8) possesses, on its periphery, a notch (82) co-operating with the cocking members (27) in order to maintain it in the cocked position.

5. Device according to any one of Claims 1 to 4, characterized in that the firing members (10) consist of two arms (11) fastened to the front of the body (4) in an extension thereof and carrying a tilting pin (12) on which is articulated a detecting element (13), the tilting of which towards the body (4) of the device by a mole situated in the gallery (2) causes the displacement in the opposite direction of a triggering rod (18), itself articulated on the detecting element (13), which extends in a through hole (19) of the body (4) of the device essentially parallel to the gun (5) and emerges in the through hole (9) enclosing the trigger (8) and carrying, at its end opposite the detecting element (13), a lug (27) co-operating with the notch (82) of the trigger (8) and constituting the cocking members, the outward displacement of the triggering rod (18) causing the release of the trigger (8) then the breech (7) towards their respective actuating positions and the firing of the cartridge (6) and the sending of a lead charge inside the gallery (2).

6. Device according to Claim 5, characterized in that the detecting element (13) consists of a tilting arm (14) carrying, in its central portion, a first through hole (15) enabling the introduction of the tilting pin (12), at one of its ends or first end, a second through hole (16) enabling the introduction of a translation pin (17) enabling the displacement of the triggering rod (18), and at its second end opposite the first, a detecting disc (22) intended to be placed over the orifice (1) of the gallery (2) in an approximately horizontal position so that it can be tilted by a mole.

7. Device according to Claim 5, characterized in that the detecting disc (22) consists of a part in the form of a frying pan pierced in its central portion to permit the passage of the shot.

## Patentansprüche

1. Vorrichtung zur Bekämpfung von Schädlingen, insbesondere von Maulwürfen, die zur Aufstellung oberhalb einer freigeräumten und ins Freie führenden Öffnung (1) eines Gangs (2) bestimmt ist und einerseits einen länglichen Körper (4), der an seinem Umfang mit Gabeln (55), die seine Befestigung in einer im wesentlichen vertikalen Position im Boden um die Öffnung (1) des Gangs (2) ermöglichen, und in seinem Inneren mit einem Lauf (5) ausgestattet ist, der zur Aufnahme einer herkömmlichen Jagdpatrone (6) bestimmt ist und mit seinem vorderen Teil (50) am Ort der Öffnung (1) des Gangs (2) mündet sowie an seinem hinteren Teil durch einen an sich bekannten Verschluß (7) verschlossen ist, der zwischen einer gespannten Position und einer Feuerposition bewegbar ist und dessen Verlagerung in die Feuerposition die Zündung der Patrone (6) und das Abfeuern einer Schrotladung ins Innere des Gangs (2) bewirkt, wobei die Verlagerung durch diejenige eines Abzugs (8) gesteuert wird, der seinerseits zwischen einer gespannten Position, in der er durch Spannelemente (27) entgegen der Kraft einer Druckfeder (26) gehalten ist, und einer Betätigungsstellung zum Befehlen der Verlagerung des Verschlusses (7) in seine Feuerposition bewegbar ist, und andererseits Zündelemente (10) umfaßt, deren Verlagerung durch einen sich im Gang (2) befindenden Maulwurf automatisch die Freigabe des Abzugs (8) und des Verschlusses (7) in ihre jeweilige Feuerposition bzw. Betätigungsstellung und die Zündung der Patrone (6) herbeiführen, dadurch gekennzeichnet, daß der die Patrone (6) in seinem hinteren Bereich (51) aufnehmende Lauf (5) in ein Sicherheitsrohr (100) eingearbeitet ist, das in einer Sicherheitsbohrung des länglichen Körpers zwischen einer Jagdposition, in der die Patrone (6) in Kontakt mit dem Verschluß (7) und einem Schlagbolzen (70) gelangen kann, und einer Sicherheitsposition (100) axial verschiebbar ist, in der die Patrone sich außerhalb der Reichweite des Schlagbolzens befindet, wobei das Sicherheitsrohr und der Lauf (5) durch die Wirkung von Sicherheitsorganen (102 bis 105) automatisch in die Sicherheitsposition zurückgeführt werden, wenn die Vorrichtung nicht auf dem Boden in einer im wesentlichen vertikalen Position ruht.

2. Vorrichtung nach Anspruch 1, dadurch gekennzeichnet, daß das Sicherheitsrohr (100) an seinem dem Verschluß (7) gegenüberliegenden Ende mit einem Y-förmigen Teil (102) ausgestattet ist, das Bohrungen (103) für die Befestigungsgabeln (55) trägt und mit dem länglichen Körper (4) mit Hilfe von Zugfedern (104) verbunden ist, die die Sicherheitsorgane darstellen und deren Widerstand zwischen dem Gewicht des Körpers (4) und dem des Teils (102) liegt, um die Vorrichtung aufgrund ihres Gewichts dann, wenn sie auf dem Boden in einer im wesentlichen vertikalen Position ruht, in die Jagdposition, und dann, wenn sie dem Gewicht nicht mehr ausgesetzt ist, in die Ruheposition zu bringen.

3. Vorrichtung nach einem der Ansprüche 1 und 2, dadurch gekennzeichnet, daß der Abzug (8) in einer im wesentlichen senkrecht zum Lauf (5) liegenden und in diesen einmündenden Bohrung (9) des Körpers (4) der Vorrichtung angebracht und durch einen Bolzen (80) gebildet ist, der an einem Ende mit einem nach außen ragenden und die Freigabe des Abzugs (8) in die Betätigungsstellung erlaubenden Knopf (83) und an seinem entgegengesetzten Ende mit einem Haltestift (84) ausgestattet ist, der mit dem Verschluß (7) zusammenwirkt, um diesen in der gespannten Position zu halten, wenn der Abzug (8) sich ebenfalls in der Betätigungsstellung befindet.

4. Vorrichtung nach Anspruch 3, dadurch gekennzeichnet, daß der Abzug (8) an seinem Umfang eine Nut (82) aufweist, die mit den Spannelementen (27) zusammenwirkt, um ihn in der gespannten Position zu halten.

5. Vorrichtung nach einem der Ansprüche 1 bis 4, dadurch gekennzeichnet, daß die Zündelemente (10) durch zwei Arme (11) gebildet sind, die vorne am Körper (4) in Verlängerung desselben befestigt sind und eine Schwenkachse (12) tragen, auf der ein Wach- bzw. Fühlerelement (13) beweglich angeordnet ist, dessen durch einen sich im Gang (2) befindenden Maulwurf ausgelöste Verschwenkung gegen den Körper (4) der Vorrichtung die Verlagerung eines Abzugsbolzens (18) im entgegengesetzten Sinn herbeiführt, der ebenfalls vom Fühlerelement (13) beweglich getragen ist, sich durch eine im wesentlichen parallel zum Lauf (5) im Körper (4) der Vorrichtung erstreckende und in die den Abzug (8) aufnehmende Bohrung (9) mündende Bohrung (19) erstreckt und an seinem dem Fühlerelement (13) gegenüberliegenden Ende einen Auslösestift (27) trägt, der mit der Nut (82) des Abzugs (8) zusammenwirkt und die Spannelemente bildet, wobei die Verlagerung des Abzugsbolzens (18) nach außen die Freigabe des Abzugs (8) und weiterhin des Verschlusses (7) in ihre Feuerposition bzw. Betätigungsstellung sowie die Zündung der Patrone (6) und das Abfeuern der Schrotladung ins Innere des Gangs (2) herbeiführt.

6. Vorrichtung nach Anspruch 5, dadurch gekennzeichnet, daß das Fühlerelement (13) durch einen Schwenkarm (14) gebildet ist, der an seinem mittleren Teil eine erste Bohrung (14), die die Anbringung der Schwenkachse (12) erlaubt, an einem seiner Enden oder an dem ersten Ende eine zweite Bohrung (16), die die Anbringung einer die Verlagerung des Abzugsbolzens (18) ermöglichenden Translationsachse (17) erlaubt, und an seinem zweiten, dem ersten gegenüberliegenden Ende eine Wach- bzw. Fühlerscheibe (22) trägt, die zur Anbringung oberhalb der Öffnung (1) des Gangs (2) in einer im wesentlichen horizontalen Position für die Möglichkeit einer Verschwenkung durch einen Maulwurf bestimmt ist.

7. Vorrichtung nach Anspruch 5, dadurch gekennzeichnet, daß die Fühlerscheibe (22) durch ein Teil in Form einer Pfanne gebildet ist, die in ihrem mittleren Teil durchbohrt ist, um den Schrotdurchgang zu ermöglichen.

# Fig.3

B

A

C

10

17  20  11  18  4  19  27  82  I  83  8  81

12

13

50  5  6  70  7  86  85  II  84  87

9  80  26

# Fig.4

13  21  22

16  14

15  23  24  25

EP 0 231 704 B1

# FIG. 4'

FIG.5

FIG. 6